(19) Europäisches Patentamt

European Patent Office

Office européen des brevets

(11) **EP 0 778 462 A2**

(12) **EUROPEAN PATENT APPLICATION**

(43) Date of publication:
**11.06.1997 Bulletin 1997/24**

(51) Int. Cl.$^6$: **G01N 21/88**

(21) Application number: **96119460.2**

(22) Date of filing: **04.12.1996**

(84) Designated Contracting States:
**AT BE CH DE DK FR IT LI SE**

(30) Priority: **04.12.1995 SE 9504326**

(71) Applicant: **Nyman, Bo**
**243 35 Höör (SE)**

(72) Inventor: **Nyman, Bo**
**243 35 Höör (SE)**

(74) Representative: **Baronetzky, Klaus, Dipl.-Ing. et al**
**Patentanwälte**
**Dipl.-Ing. R. Splanemann, Dr. B. Reitzner, Dipl.-Ing. K. Baronetzky**
**Tal 13**
**80331 München (DE)**

(54) **Method and device for inspecting the edge of a board**

(57) A method of sensing the edge of a planar object (10), wherein said edge is illuminated and an image of the edge is continuously registered by an electronic camera (12), the optical axis of which is directed at a first angle ($\alpha$) toward the edge. A line (16) on the edge is illuminated by lighting means (11), whose light is directed toward the edge at a second angle ($\beta$). The dimensions of the respective recessed and protruding portions of the edge are determined by measuring the dimensions of the image of the line as registered by the camera (12).

FIG 1

EP 0 778 462 A2

## Description

### Technical field of the invention

For the manufacture of various types of boards it is desirable to automatically sense and register dimensions and characteristics of the edges of the boards. The present invention concerns a method and a device used for sensing the board edge in accord with the preambles of the accompanying independent patent claims.

### State of the art

In particular when it comes to the manufacture of floor boarding with veneer, plywood or other surface layer, it is necessary to carefully check the surface layer across the entire length of the boarding. According to previously known methods for optical sensing or scanning of the board surface layer, it is a fact that the surface layer has very deviant light-reflective characteristics, and this is utilized. The edge of the board is illuminated and an image of the edge is continuously registered in an electronic camera. The value of the reflected light intensity around the surface layer is determined through the image registered by the camera. The value is then used to assess whether the surface layer is damaged or deviates in any way from the normal.

In those cases when the edges are joined together in a tongue and groove connection, it is of additional importance that the construction of the groove and tongue is correct. Certain dimensions must meet certain requirements for the two boards to join together in the desired way. It is therefore desirable to be able to automatically and rapidly measure and register the edge surfaces of this kind of board.

### Summary of the invention

An objective of the invention is to provide the automatic sensing described above. Sensing should occur quickly so that the boarding can be routed without delay past a site of sensor detection.

### Brief description of the drawings

The invention will now be described in more detail with the aid of exemplary embodiments with reference to the accompanying drawings, in which

FIGURE 1 is cross-sectional view showing an arrangement for sensing an edge in accordance with this invention and

FIGURE 2 is a front plane view of an edge, the left portion of which is free of defects while the right-hand portion is defective.

## Description

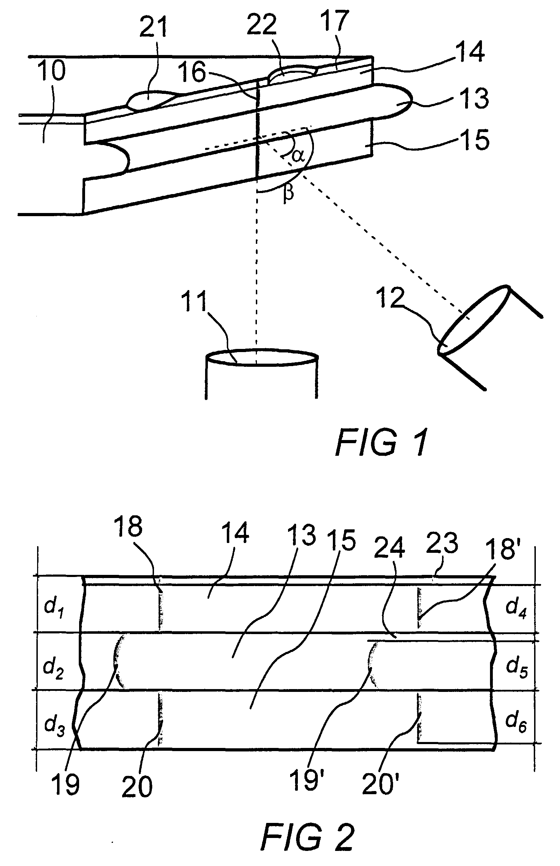

In the arrangement of Figure 1 an object 10 in the form of a board is illuminated by lighting means 11. On one side edge the board is equipped with a tongue 13, which protrudes between an upper first base portion 14 and a lower second base portion 15. The board of the shown arrangement also includes a surface layer 17, which for example can be composed of harder surface materials. A second edge of the board, usually the one opposed to that shown in Figure 1 is provided with a corresponding groove so that two boards can be joined together in a groove and tongue connection. The lighting means 11 illuminates a line 16 extending across the entire length of the board edge. Line 16 should be well defined and the lighting means, therefore, should include a light source that emits a concentrated light beam.

An electronic camera 12 is directed toward the edge for video registration of an image of the edge and line 16. The direction of the camera 12 is such that its optical axis forms a first angle $\alpha$ toward the plane of the edge. In the shown arrangement the plane of the edge includes a first and second base portion.

The lighting means 11 is arranged in such a manner that its emitted light will hit the edge of the board at a second angle $\beta$ toward the plane of the edge. Advantageously, the lighting means 11 is in the same plane as the camera 12. To enable measurement in accord with the principles of triangulation it is a prerequisite that $\alpha \neq \beta$. In the shown arrangement as per Figure 1, $\alpha=90°$ and $\beta=135°$. It is also possible to select other angles.

In the first place it is important to find those deviations in dimensions that relate to damages of the surface layer 17, and to different heights of the upper first base portion. In the first case the damage is visible upon assembly of the board, and in the second case the deviation results in the existence of a height difference between two adjacent boards. A first example of damage of the surface layer is illustrated at 21. This kind of damage is a rounded depression in the surface layer. A second example is shown at 22. In that case an edged portion of the surface layer has been removed. It is important to detect and locate these two kinds of damages.

Figure 2 shows, on the left side, what the line looks like that the light beam from lighting means 11 outlines, as viewed from the camera 12 during illumination of a defect-free portion of the edge. Note that the thickness of the surface layer 17 has been exaggerated. The line is divided into an upper portion 18 comprising the first base portion 14 and surface layer 17, an intermediate portion 19 being reflected from tongue 13, and a lower portion 20 comprising the second base portion 15. The upper portion 18 of the line has the length $d_1$, intermediate portion 19 has the length $d_2$, and lower portion 20 has the length $d_3$.

The camera 12 registers an image of lines 18, 19, 20, and calculation means provided in the camera, or connected to the camera, determines the lengths of the lines in the image. These lengths correspond to the lengths of $d_1$, $d_2$, and $d_3$ which, in turn, correspond to the dimensions of the recessed and protruding portions of the edge, that is groove and tongue, respectively, and the first base portion 14 and second base portion 15.

The device described above is used in the following way. A "normal board" having the correct dimensions is routed past the arrangement of Figure 1. The image of lines 18, 19, 20 is registered in camera 12, and the lengths $d_1$, $d_2$, and $d_3$ are determined either in a CPU integrated with the camera sensor, which is the fashion preferred, or in a CPU connected to the sensor. The preferred design uses a sensor of the MAPP2200 type from INTEGRATED VISION PRODUCTS AB, Linköping, Sweden. The processor unit is also connected to an external control unit which encompasses or is connected to a monitor and key board. Limit value and alarm limit signals for indication of defective boards are supplied to the control unit in a conventional manner.

Boards from the production line are then routed past the measuring arrangement, and values of the lengths of the lines are continuously registered in the camera 12. From the right-hand portion of Figure 2 the following length measurement result has been registered. An upper line 18', which corresponds to 18 in the left side portion of Figure 2, has the length $d_4$. An intermediary line 19', which corresponds to 19 in the left side portion of Figure 2, has the length $d_5$. Finally, a lower line 20' corresponding to 20 in the left side portion of Figure 2 has the length $d_6$.

These latter registered values are continuously compared to the stored normal values and to any limit values and intervals. As an example, the following can be ascertained. If $d_4 < d_1$, there is a depression in the surface layer (on the upper side of the board), or a bump, swelling or similar on the upper side of tongue 13. If $d_4+d_5 < d_1+d_2$, there is a depression in the surface layer or a depression in the bottom side of the tongue. If $d_4+d_5+d_6 < d_1+d_2+d_3$, there is a depression in the surface layer or a depression in the bottom side of the board. If all three conditions above are met the probability is extremely great that a depression on the upper side has been detected. This is usually a serious fault, since, if that is the case, the surface layer must have been damaged and a defect would therefore be visible upon assembly. Thus, such a state of shortcoming can be indicated in various ways and/or lead to disposal of the board or to other suitable actions. Similar comparisons may be made to detect bumps on the upper or bottom side, which may imply non-adherence of glue or similar, and bumps on or depressions in tongues or grooves.

Through careful analysis of $d_4$ in relation to the normal value and any limit values very small depressions can be detected in the upper side. The upper part of line 18 can deviate in the uppermost portion as a result from a flat knock out. This is the case of the damage as indicated at 21 in Figure 1. If the knock out is sharp at the edges, the line will refract into a lower segment 18' and an upper segment 23, which is laterally displaced to the first one. A corresponding damage to the tongue 13 may result in a line 24 displaced from the intermediary portion 19' of the line.

Other corresponding conditions are used for the different lengths, when the groove side of the board is examined. The recessed portion, which is the groove, also causes the intermediary portion 19; 19' of the line to displace to the right rather than to the left as in the example shown.

The light source included in the lighting means preferably comprises some form of a laser diode or similar so that a line of the desired width can be produced on the object being measured.

## Claims

1. A method of sensing the edge of a planar object (10), wherein said edge is illuminated and an image of the edge is continuously registered by an electronic camera (12) having an optical axis directed at a first angle ($\alpha$) toward the edge, characterized in that a line (16) on the edge is illuminated by lighting means (11), the light from said means (11) is directed toward the edge at a second angle ($\beta$), and the dimensions of the respective recessed and protruding portions of the edge are determined by measuring the dimensions of the image of the line as registered by the camera (12).

2. A method according to Claim 1, characterized in that measurement values for the dimensions of the respective recessed or protruding portions of the edge are determined and stored, and that measurement values for the corresponding dimensions of other objects are compared with the stored measurement values, and any deviations from the predetermined limits being indicated.

3. A method according to Claim 2, wherein the edge is part of a groove and tongue connection, characterized in that the length ($d_1$;$d_4$) of a first portion (18;18') of the line from the normal object is determined as a measure for a first base portion of the connection, a possible surface layer being included in the first base portion, the length of a second portion ($d_2$) of the line from the normal object is determined as a measure for the protruding and recessed, respectively, portion of the connection, and the length of a third portion ($d_3$) of the line from the normal object is determined as a measure for another base portion of the connection, and that corresponding lengths are determined from test objects, whereby a first portion ($d_4$) of the test object shorter than that of the normal object is indicated as damaged surface or damaged surface layer of the test object.

4. A method as claimed in Claim 1, characterized in that said first angle ($\alpha$) is approximately equal to 90°, and that said second angle ($\beta$) is approximately equal to 135°.

5. A device for sensing the edge of a planar object (10), comprising lighting means (11) provided for illuminating the edge (10), an electronic camera (12) arranged with an optical axis directed at a first angle ($\alpha$) toward the edge for continuous registration of an image of the edge by said camera, characterized in that said lighting means (11) is designed to illuminate a line (16) of said edge, said lighting means is provided such that light emitted from the lighting means (11) hits the object (10) at a second angle ($\beta$), said first angle ($\alpha$) being different from said second angle ($\beta$), and the camera (12) is associated with calculation means to determine the dimensions of the recessed and protruding portions of the edge based on the image of the line registered by the camera.

6. A device according to Claim 5, characterized in that said lighting means comprises a set of light diodes arranged in a rectangular shape.

EP 0 778 462 A2

FIG 1

FIG 2